# EUROPEAN PATENT APPLICATION

(11) **EP 4 510 527 A1**
(43) Date of publication of application: **19.02.2025**
(21) Application number: 24183922.4
(22) Date of filing: 24.06.2024
(51) Int. Cl.: H04L 47/2441, H04L 47/62, H04L 12/46, H04L 47/2408, H04L 47/6275

(54) **SPLIT PACKET ROUTER FOR TIME SENSITIVE NETWORKING**

(30) Priority: 16.08.2023 US 202318234622
(71) Applicant: Intel Corporation, Santa Clara, CA 95054 (US)
(72) Inventor: KASICHAINULA, Kishore, Phoenix, 85023 (US)
(74) Representative: Maiwald GmbH

(57) **Abstract**

A network interface device for implementing scheduling for time sensitive networking includes a network interface device comprising media access control (MAC) circuitry, including a priority router to parse a packet payload to determine a priority value; determine a corresponding traffic class based on the priority value from the packet payload; and route the packet payload to one of a plurality of traffic class-based packet buffers based on the traffic class; and a packet router to: retrieve a packet payload from the plurality of traffic class-based packet buffers based on the traffic class; and place the packet payload in a queue for a direct memory access (DMA) circuitry to store the packet payload in main memory.

## Description

### TECHNICAL FIELD

Embodiments described herein generally relate to data communication systems and in particular to a split packet router for time sensitive networking.

### BACKGROUND

Currently, network cards transmit and receive data packets. As network use grows and additional systems come online to serve more data to more end users, data communication services need to become faster and more efficient. At the network card level, effective and deterministic packet processing is needed to decrease latency and increase throughput in a network.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
FIG. 1 is a schematic diagram illustrating an operating environment, according to an embodiment;
FIG. 2 is a schematic diagram illustrating transmitter circuitry in a NID for time sensitive networking (TSN), according to an embodiment;
FIG. 3 is a schematic diagram illustrating receiver circuitry in a network interface device (NID) for time sensitive networking (TSN), according to an embodiment;
FIG. 4 is a block diagram illustrating a priority code point (PCP) to traffic class (TC) mapping, according to an embodiment;
FIG. 5 is a block diagram illustrating an Ethernet frame with a virtual local area network (VLAN) tag, according to an embodiment;
FIG. 6 is a flowchart illustrating a method for scheduling at a network interface device, according to an embodiment;
FIG. 7 is a flowchart illustrating a method for processing received packets at a network interface device, according to an embodiment; and
FIG. 8 is a block diagram illustrating an example machine upon which any one or more of the techniques (e.g., methodologies) discussed herein may perform, according to an example embodiment.

### DETAILED DESCRIPTION

In the following description, for purposes of explanation, numerous specific details are set forth in order to provide a thorough understanding of some example embodiments. It will be evident, however, to one skilled in the art that the present disclosure may be practiced without these specific details.

The emerging standards for deterministic networking (e.g., IEEE standards) that are referred to collectively as Time Sensitive Networking (TSN) provide extremely precise data transfer across the network. As a result, embedded designs in the industrial and automotive space are increasingly integrating TSN controllers. The inevitable convergence of information technology (IT) and operational technology (OT), workload consolidation, and demand for seamless communication across many connected devices necessitates transfer of various types of data traffic through a network interface controller (NIC) without sacrificing the latencies for hard real-time applications. With application logic refactored into networks of interactive microservices, this latency sensitivity extends beyond just that of hard real time applications because control over response times at the application level requires stringent control over the buildup of latencies across each of many network interactions between a client and server.

To address these different types of traffic, the IEEE 802.1Q standard defined eight traffic classes with corresponding priorities. To support these eight traffic classes, the current generation of NICs implemented eight transmit (Tx) and eight receive (Rx) queues with each pair of transmit and receive queues dedicated to one of the eight traffic classes.

Though the PCP (priority code point) priority fields defined in the Ethernet packet header is meant to be used to provide QoS for different criticality of data traffic, the current TSN network controllers seldom use this field to route the data within the hardware. This is because many of the today's network controller architectures are focused on high data throughput rather than low latency. For example, some NICs simply add traffic classes on top of existing architecture without optimizing the packet routing. In these unoptimized architectures, the packets received from the network are first stored in a huge buffer (typically few hundred KB) in the order they received. Then these packets are retrieved from the internal memory to be processed by a packet router (e.g., a flow director), which parses and filters the packets before redirecting to different traffic class buffers. The main disadvantage of this type of architecture is that the time critical packets that follow best effort packets will be stored in the memory behind the best effort packets. Due to back pressure at the packet router, these time critical packets will sit in the memory for a long duration until the best effort packets that arrived before them are processed. With additional and more complex filtering and parsing rules, the packet router will experience higher back pressure and the time critical packets will sit in the memory longer. Hence, this adds considerable undesired latency.

Alternatively, other types of architectures address the latency issue by performing parsing and filtering as soon as they receive packets before redirecting the packets to traffic class packet buffers. Though this type of architecture solves the latency issue, it is not scalable for high speed NICs (e.g., at 10Gbps and above). This is because the packet router needs to parse and filter the packets within the inter-packet-gap (IPG) before the next packet arrives. With the higher the speeds, the IPG becomes smaller. For example, at 10Gbs speeds, the IPG is 9.6ns. It gets worse at 25Gbs speeds, where the IPG is just 3.84ns. This is simply not enough time to perform packet parsing and filtering. To address this, some packet routers are designed for parallel parsing and filtering. However, this architecture comes at the cost of large area overhead and increased power requirements, which directly affects the silicon die area and cost of the product.

What is needed is a mechanism to handle time sensitive networking in a high throughput network. The systems and mechanisms described here may reduce both latency and area overhead by splitting (e.g., separating, bifurcating) the packet router into two portions: a priority-based router and a received packet router. By splitting the operations of routing based on priority and writing packets to main memory, the split packet router is fast enough for high speed NICs and minimizes the use of die area and corresponding cost.

When receiving packets, the priority-based router analyzes a packet's priority field (e.g., PCP field) and quickly routes the packet to a traffic class-based receive buffer based on the priority value. In the case of PCP, because a PCP field is 3-bits, the packet filtering portion of the packet router is able to execute fast and only require a small area. Once the packets are routed to different traffic class buffers based on the PCP field, the received packet router (e.g., the second portion of the packet router) routes the packets to corresponding software queues using dedicated DMA channels.

When transmitting packets, the priority router analyzes the priority field of outgoing packets before routing the packets to a traffic class-based transmit buffer. The packets are retrieved from the transmit buffer based on their traffic class and the rules used by the scheduler on when the packets are to be transmitted. The split architecture is scalable, incurs very low latency and is highly area efficient. Additional details are provided below.

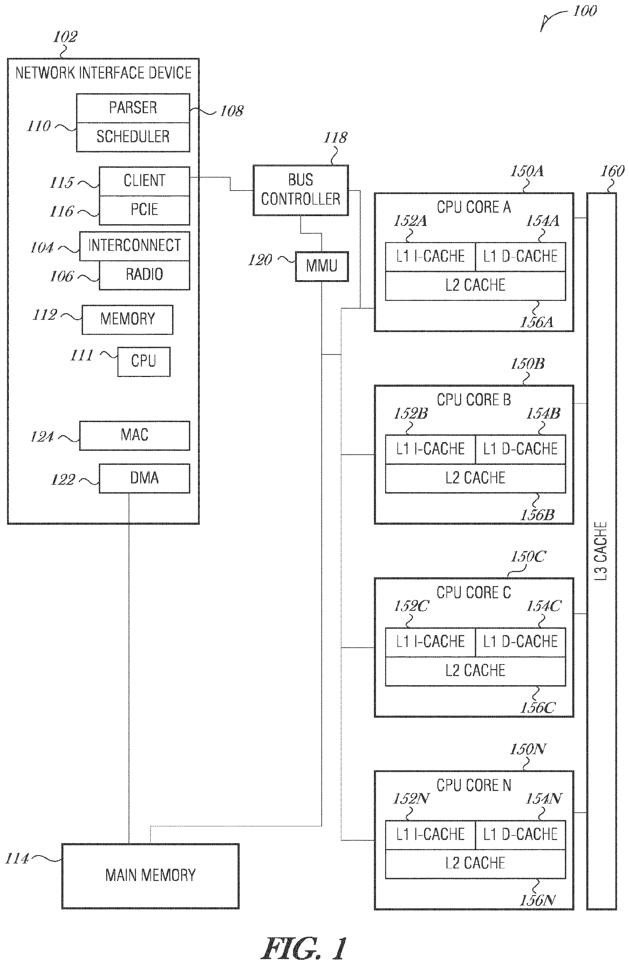

FIG. 1 is a schematic diagram illustrating an operating environment 100, according to an embodiment. The operating environment 100 may be a server computer, desktop computer, laptop, wearable device, hybrid device, onboard vehicle system, network switch, network router, or other compute device capable of receiving and processing network traffic. The operating environment 100 includes a network interface device (NID) 102. The NID 102 includes electronic circuity to support the data link layer with the physical layer. In particular, the NID 102 is able to receive data using an interconnect 104 or radio 106. The interconnect 104 is arranged to accept signals over a physical media, where the signals are arranged into some supported L2 framing, and interpret the incoming signal stream as a stream of bits organized into L2 units called "frames." The interconnect 104 may be an Ethernet port, for example. The radio 106 is able to send and receive radio frequency (RF) data and is used to communicate over wireless protocols, such as Wi-Fi, Bluetooth, Zigbee, cellular communications, and the like. Other types of communication interfaces may be supported by NID 102, such as Gigabit Ethernet, Asynchronous Transfer Mode (ATM), High-Speed Serial Interface (HSSI), Packet over SONET (POS), Fiber Distributed Data Interface (FDDI), Fiber to the Home (FTTH), and the like. In these cases, appropriate ports may be provided in the NID architecture. The NID 102 may also come in a form factor of an extension card, and as such, may be referred to as a network interface card or network interface controller (NIC).

The NID 102 includes circuitry, such as a packet parser 108 and a scheduler circuit 110. The packet parser 108 and the scheduler circuit 110 may use NID memory 112 or main memory 114 for various operations such as queuing packets, saving state data, storing historical data, supporting a neural network, or the like.

The NID 102 also includes a direct memory access (DMA) circuit 122 and media access control (MAC) circuit 124 (also referred to as medium access control (MAC)). The DMA circuit 122 may be used to access main memory 114 through a fabric (e.g., Intel^{®} On-Chip System Fabric (IOSF)). The DMA circuit 122 interfaces with the MAC circuit 124 to prepare frames for transmission. The MAC circuit 124 is able to perform: frame delimiting and recognition; addressing of destination stations (both as individual stations and as groups of stations), conveyance of source-station addressing information, provide transparent data transfer of LLC PDUs or of equivalent information in the Ethernet sublayer, protection against errors, generally by means of generating and checking frame check sequences, and control of access to the physical transmission medium. In the case of Ethernet, the functions required of a MAC circuit 124 is to: receive/transmit normal frames; provide half-duplex retransmission and backoff functions; append/check FCS (frame check sequence); enforce interframe gap; discard malformed frames; prepend(tx)/remove(rx) preamble, SFD (start frame delimiter), and padding; and provide half-duplex compatibility: append(tx)/remove(rx) MAC address.

The packet parser 108, scheduler circuit 110, DMA circuit 122, and MAC circuit 124 may be implemented using an on-NID CPU 111, an ASIC, an FPGA, or other type of computing unit on the NID 102. Further, portions of the packet parser 108, scheduler circuit 110, DMA circuit 122, and MAC circuit 124 may be incorporated into common circuitry, on a same die, or virtualized. It is understood that various arrangements of these components may be used according to available power, area, design, or other factors.

The operating environment 100 also includes central processing unit (CPU) cores 150A, 150B, 150C, and 150N (collectively referred to as 150A-N). Although four cores are illustrated in FIG. 1, it is understood that more or fewer cores may exist in particular CPU architectures. Additionally, there may be multiple CPUs logically grouped together to create a CPU complex. Mechanisms described herein may be used for a single-core CPU, a multi-core CPU, or multiple CPUs acting in concert.

The NID 102 may communicate with the cores 150A-N, main memory 114, or other portions of the operating environment 100 via a suitable interconnect channel, such as Peripheral Component Interconnect Express (PCIe) connector 116. PCIe connector 116 may be of any width (e.g., x1, x4, x12, x16, or x32). Other interconnect channels include Intel^{®} On-Chip System Fabric (IOSF), QuickPath Interconnect (QPI), and Primary Scalable Fabric (PSF).

The NID 102 may communicate with cores 150A-N over a bus, such as a PCIe bus. A PCIe client 115 controls the bus and the PCIe connector 116 in the NID 102 interfaces with a bus controller 118. The PCIe client 115 may perform additional functions, such as controlling allocation of internal resources to virtual domains, support various forms of I/O virtualization (e.g., single root input/output virtualization (SR-IOV)), and other functions. The PCIe bus controller 118 may be incorporated into the same die that includes the cores 150AN. A platform controller hub may include the PCIe bus controller 118, memory management unit (MMU) 120, Serial ATA controllers, Universal Serial Bus (USB) controllers, clock controller, trusted platform module (TPM), serial-peripheral interface (SPI), and other components in the processor die.

Modern processor architectures have multiple levels in the cache hierarchy before going to main memory. In many designs the outermost level of cache is shared by all cores on the same physical chip (e.g., in the same package) while the innermost cache levels are per core.

In the example illustrated in FIG. 1, each CPU core 150A-N includes a corresponding L1 cache, separated into an L1 instruction cache 152A, 152B, 152C, 152N (collectively referred to as 152A-N) and an L1 data cache 154A, 154B, 154C, 154N (collectively referred to as 154A-N). The cores 150A-N also each include an L2 cache 156A, 156B, 156C, 156N (collectively referred to as 156A-N). The size of the L1 caches and L2 caches vary depending on the processor design. Conventional sizes range from 32KB to 64KB for L1 cache size (e.g., 16KB instruction and 16KB data, or 32KB instruction and 32KB data), and 256KB to 512KB for L2 cache size. L3 cache size may vary from 8MB to 12MB or more.

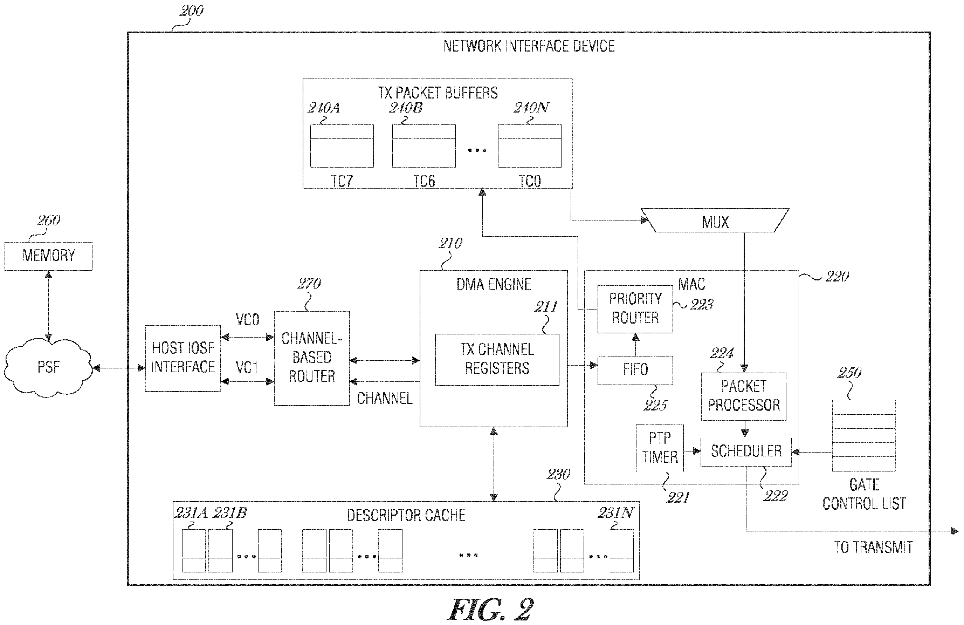

FIG. 2 is a schematic diagram illustrating transmitter circuitry in a NID 200 for time sensitive networking (TSN), according to an embodiment. The NID 200 includes a DMA engine 210 and MAC circuitry 220 to transmit packets in a time sensitive network environment. The DMA engine 210 is a multichannel DMA engine and includes transmit (tx) channel registers 211. These registers 211 are used for data transfer from main memory 260 (e.g., DDR) to the packet buffers 240A-C in the network interface device 200. For example, the tx channel registers 211 may include a head pointer register and a tail pointer register needed to access transmit descriptor buffers for DMA operations. The MAC circuitry 220 includes a Precision Time Protocol (PTP) timer 221, a gate control list (GCL) based scheduler 222, a priority router 223, packet processor 224, and first-in-first-out (FIFO) queue 225.

For packet transmission, the DMA engine 210 first fetches descriptors of all available queues once their tail pointers in the TRB (transmission ring buffer) (not shown) get advanced. Ring buffers are data structures in the application or middleware memory space and are used to store packets of a data stream. Each ring buffer uses a head pointer and a tail pointer to indicate the start and end of the queue. Packets are copied from the ring buffers to the transmit packet buffers (for transmission) or from the receive packet buffers to the ring buffers (on receipt). All the descriptors are normally fetched on the VC0 virtual channel. Channel based routing can be used to map time critical channels to virtual channel VC1. A channel-based router 270 is used to handle communications between the DMA engine 210 and the memory 260 using the virtual channels (e.g., VC0 and VC1) established between the host and the NID 200.

The fetched descriptors are stored in traffic class-based descriptor cache 230. The transmit descriptor cache 230 includes a separate queue for each channel. In an embodiment, 64 transmit channels and 64 receive channels are supported by the DMA engine 210. It is understood that there may be more or fewer transmit and receive channels. Each DMA channel processes one ring buffer and each ring buffer is mapped to one of the eight traffic classes (TC0-TC7) as defined by a user. The traffic and channel router 270 provides a channel number to the DMA engine 210 based on the virtual channel used. The descriptors are prefetched and stored in a descriptor cache 230 to reduce end-to-end transmit latency. Each channel has an associated descriptor prefetch cache 231A, 231B,..., 231N (collectively referred to as 231A-N).

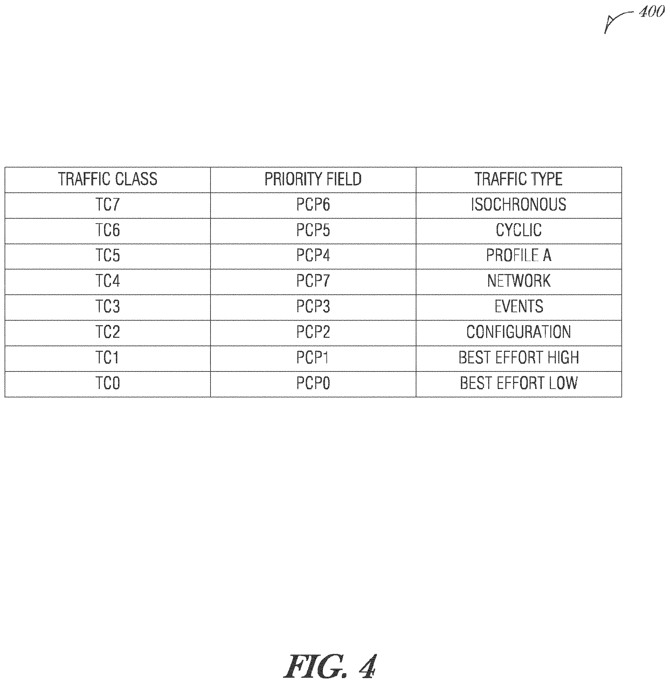

The DMA engine 210 parses the descriptors and fetches the packet payload, which are stored in a first-in-first-out (FIFO) queue 225. The fetched packet payloads are parsed by the priority router 223 for field decoding. Priority router 223 may use any priority-based routing mechanism, such as one that examines L2, L3, or L4 priority fields and routes packets based on a selected priority field. An example priority field includes a Priority Code Point (PCP) field. Because the PCP field is just 3-bits, it is straightforward to parse the packets. Based on this field encoding, the MAC circuitry 220 pushes the packets into respective traffic class-based transmit packet buffers 240A-N. The encoding of PCP to traffic class is shown in FIG. 4. For example, high priority express packets are pushed into the TC7 packet queue.

These packets will be fetched by the MAC scheduler 222 based on the launch time of the packet. The GCL-based scheduler 222 uses a gate control list 250 to determine from which ring buffer to read and transmit packets from. Because ring buffers are associated with traffic classes, the GCL-based scheduler 222 effectively schedules per traffic class from several ring buffers.

There are several IEEE 802.1 standards that may be used as scheduling algorithms implemented in the MAC circuitry 220. For example, 802.1 Qbv defines gate-control based scheduling where based on the gate opening time slot that particular queue packets will be fetched from the packet buffer and transmitted. A packet processor 224 is used for additional packet processing such as (virtual local area network) VLAN tag insertion or replacement. This packet processing is done after reading the packet from the packet buffer 240A-N thus eliminating the latency bubble due to back pressure of packet processing.

A PTP timer 221 is used to synchronize clocks for packet scheduling. A gating cycle is a period and used to cycle through active classes in the gate control list 250. The cycle time is the duration of the gating cycle. The cycle time used in these examples is 100µs; however it is understood that any duration may be used as the cycle time.

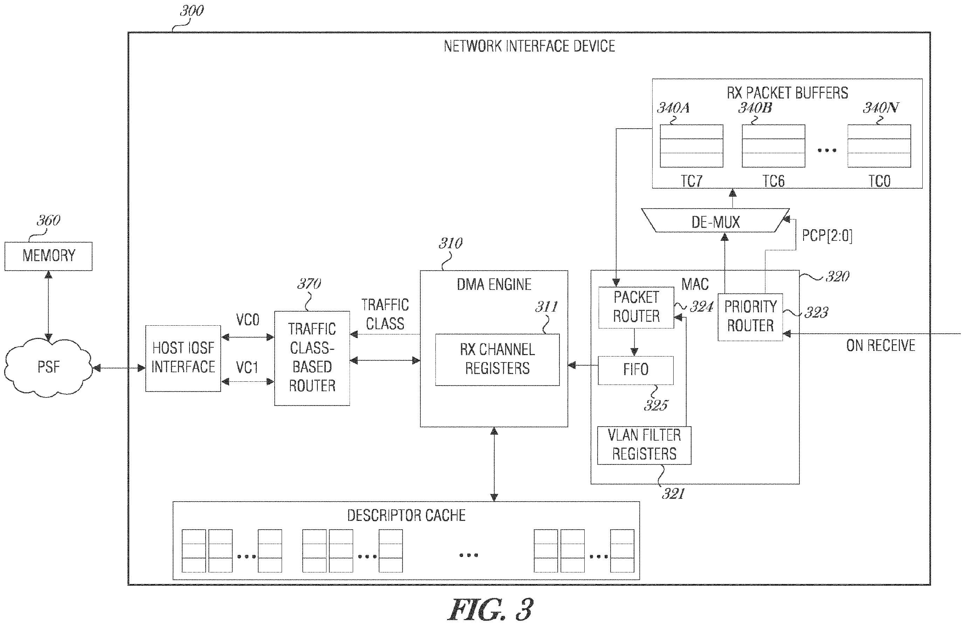

FIG. 3 is a schematic diagram illustrating receiver circuitry in a NID 300 for time sensitive networking (TSN), according to an embodiment. The NID 300 may be incorporated with the NID 200, such that a composite NID may provide both transmitter circuitry and receiver circuitry. Similar to the NID 200, the NID 300 includes a DMA engine 310 and MAC circuitry 320 to receive packets in a time sensitive network environment. The DMA engine 310 is a multichannel DMA engine and includes receive (rx) channel registers 311. The MAC circuitry 320 includes a priority router 323, packet router 324, first-in-first-out (FIFO) queue 325, and VLAN filter registers 321.

Packet router 324 may be implemented as a packet distributor or packet distribution mechanism that a network interface controller uses to route packets to and from buffers in host memory or on-NIC memory. As such, packet router 324 may be implemented in various forms, such as a flow director, a Receive Side Scaling (RSS) mechanism, or Receive Packet Steering (RPS) mechanism. RSS is a network driver technology that enables the efficient distribution of network receive processing across multiple CPUs in multiprocessor systems. RPS uses a hash algorithm, based on packet IP addresses and ports, to distribute received network traffic across multiple cores.

Packets are received from the wire are routed by the priority router 323 to priority-based packet buffers 340A, 340B, ..., 340N (collectively referred to as 340A-N) using field encoding in the packet (e.g., PCP field encoding). A driver allocates some number of descriptors (not shown) in main memory 360 and stores each packet buffer address in a descriptor receive ring buffer (RRB). The starting location address of the RBB, the length of the RBB, and the head and tail locations in the RBB, are programmed in the rx channel registers 311. Using the RRB, the NID 300 is able to know which descriptors are available and thus, which packet buffers in main memory 360 pointed to by those descriptors are available.

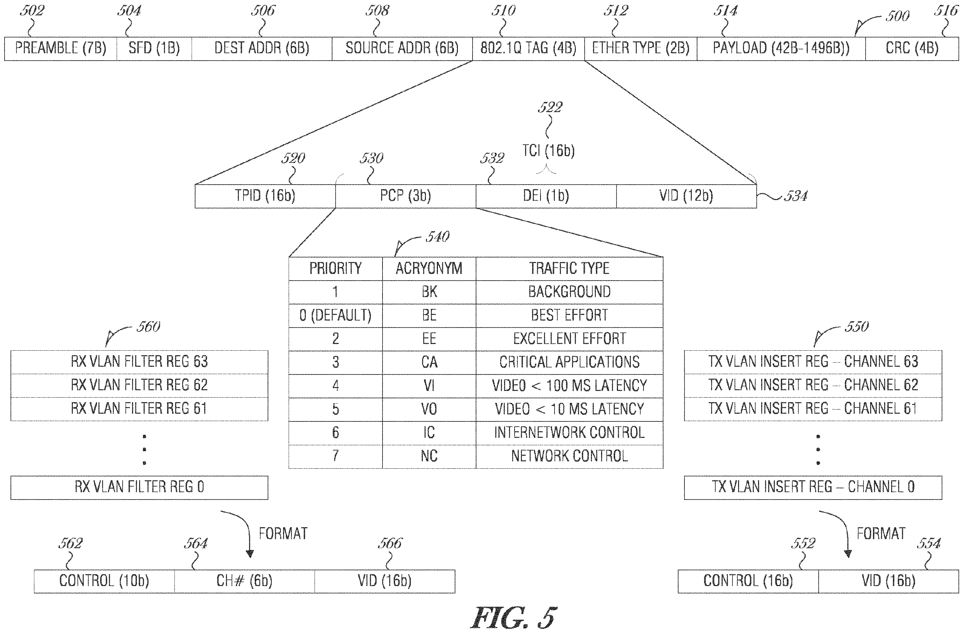

The MAC circuitry 320 prefetches the available descriptors from RRB when the software forwards the tail pointer. Based on the strict priority, the MAC circuitry 320 prefetches rx packet descriptors. When the MAC circuitry 320 receives packets, the MAC circuitry 320 (e.g., packet router 324) initiates a DMA write to memory 360 from the packet buffers 340A-N. These rx packet descriptors contain address pointers to where the received data will be written to main memory 360. The MAC circuitry 320 utilizes the appropriate DMA channel based on the packet router rules and the VLAN filter registers 321. These rules are defined using several exact or hash-based filters. For example, VLAN filter registers 560 illustrated in FIG. 5 provide rules where packets belonging to a certain VLAN tag (VID) are mapped to a particular DMA channel and thus to an application queue in memory 360.

A traffic class-based router 370 is used to handle communications between the DMA engine 310 and the memory 360 using the virtual channels (e.g., VC0 and VC1) established between the host and the NID 300.

Because packets are routed using the priority router 323 as soon as the packet arrives, the critical packets are not delayed behind best effort packets, thus eliminating the latency associated in waiting for packet processing used in previous systems. FIGS. 4 and 5 illustrate the packet format and PCP field priorities defined by the 802.1Q standard. The receive (rx) registers 311 store mappings for a VLAN tag to a particular channel for both transmit and receive operations. Similar parsing and filtering can be done with L2, L3, or L4 headers.

FIG. 4 is a block diagram illustrating a priority code point (PCP) to traffic class (TC) mapping 400, according to an embodiment. In the VLAN tag, there is a 3-bit PCP field. With three bits, there are a total of eight possible values for the PCP value. Each of these PCP values (PCP0...PCP7) are mapped to a TC (TC0...TC8). A traffic type description is provided in the mapping 400. It is understood that this is one example of a PCP to TC mapping and that any other mapping may be used. Further, it is understood that traffic types may be referred to as traffic classes, and that their definition and descriptions may be set by an administrator, a standards body, an organization, or by another entity.

FIG. 5 is a block diagram illustrating an Ethernet frame 500 with a virtual local area network (VLAN) tag, according to an embodiment. The Ethernet frame 500 includes a 7-byte (54 bit) preamble 502, a one-byte (8 bit) start frame delimiter (SFD) field 504, a 6-byte (48 bit) destination MAC address 506, a 6-byte (48 bit) source MAC address 508, a 4-byte (32 bit) VLAN tag 510, a 2-byte (16 bit) Ether type field 512, a variable length payload field 514, and a 4-byte (32 bit) cyclic redundancy check (CRC) field 516.

The payload field 514 is a variable length field with a minimum size governed by the minimum 64-byte Ethernet frame transmission size. As such, with the header fields (preamble 502, SFD field 504, destination MAC address 506, and source MAC address 508) and the CRC field 516, the minimum payload field size is 42-bytes when using a single VLAN tag 510. If using nested VLAN tags 510, then the minimum payload field size is reduced by four bytes (32 bits). Similarly, the maximum payload field size is governed by the maximum allowable Ethernet frame transmission size.

The VLAN tag 510 includes a 2-byte (16 bit) tag protocol identifier (TPID) field 520 and a 2-btye (16 bit) tag control information (TCI) field 522. The TCI field 522 is further broken down into subfields including a 3-bit priority code point (PCP) field 530, a 1-bit drop eligible indicator (DEI) field 532, and a 12-bit VLAN identifier (VID) field 534. The TPID field 520 is used to indicate that the frame has a VLAN tag. The PCP field 530 depicts the frame's priority level. Different PCP values are used to correspond with different traffic classes. The DEI field 532 is used to indicate frames eligible to be dropped when there is congestion. The VID field 534 is used to specify the VLAN to which the frame belongs. There may be certain VID values that are reserved or hold special meaning.

FIG. 5 also illustrates another example of a PCP to traffic type mapping 540. The mapping 540 is used to create control and VID fields in transmit VLAN registers 550 and receive VLAN filter registers 560. Transmit VLAN registers 550 have the format of a 2-byte (16 bit) control field 552 and a 2-byte (16 bit) VID field 554. The transmit VLAN registers 550 are used for inserting VLAN tags into transmit packets. The VID field 554 in the transmit VLAN registers 550 may include the same information as the VID field 534 in the 802.1Q tag 510. In an embodiment, the 16-bit control field 552 is used to indicate an inner VLAN or outer VLAN, whether to add VLAN or not, whether to override an existing VLAN, or other options.

The receive VLAN filter registers 560 have the format of 10-bit control field 562, a 6-bit channel number field 564, and a 2-byte (16 bit) VID field 566. The receive VLAN filter registers 560 store rules and are used to route packets to a specific DMA channel within the same traffic class. There may be multiple DMA channels mapped to same traffic class. In other words, there may be multiple data streams that may be mapped to same traffic class. In an embodiment, the 6-bit channel number field 564 of the receive VLAN filter register 560 is used for directing the received packets to a particular DMA channel. In an embodiment, there are 64 DMA receive channels and as such, 6 bits are used to designate a specific one of the 64 channels. The 10-bit control field 562 is used for inner VLAN or outer VLAN filtering, removing the VLAN tag from receive data, or other options. The VID field 566 may include the same information as the VID field 534 in the 802.1Q tag 510.

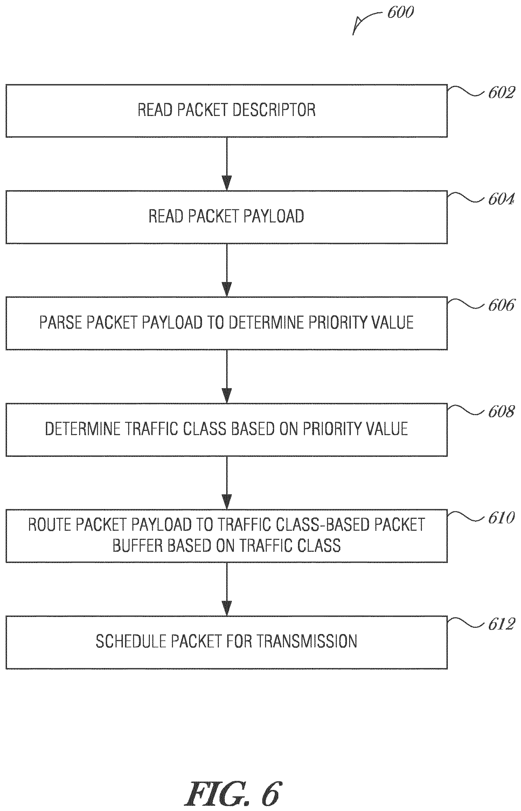

FIG. 6 is a flowchart illustrating a method 600 for scheduling at a network interface device, according to an embodiment. At 602, the method 600 includes reading a packet descriptor from a descriptor cache.

At 604, the method 600 includes reading a packet payload corresponding to the packet descriptor from main memory.

At 606, the method 600 includes parsing the packet payload to determine a priority value. In an embodiment, parsing the packet payload to determine the priority value comprises decoding a 3-bit priority code point (PCP) field in a virtual local area network (VLAN) tag. In a further embodiment, the VLAN tag is an IEEE 802.1Q tag.

At 608, the method 600 includes determining a corresponding traffic class based on the priority value from the packet payload. In an embodiment, determining the corresponding traffic class based on the priority value from the packet payload includes performing a lookup in a PCP-to-traffic class map.

At 610, At 608, the method 600 includes routing the packet payload to one of a plurality of traffic class-based packet buffers based on the traffic class.

At 612, the method 600 includes scheduling packets from the plurality of traffic class-based packet buffers for transmission.

In an embodiment, the method 600 includes modifying the packet payload before transmission. In another embodiment, the method 600 includes inserting a VLAN tag into a packet header of the packet payload. In another embodiment, the method 600 includes inserting an IEEE 802.1Q tag into a packet header of the packet payload. In another embodiment, the method 600 includes replacing an existing VLAN tag with a different VLAN tag in a packet header of the packet payload.

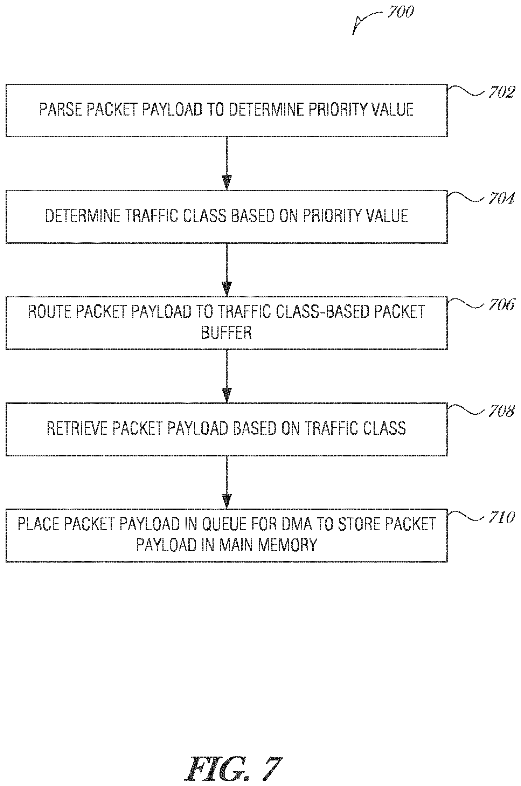

FIG. 7 is a flowchart illustrating a method 700 for processing received packets at a network interface device, according to an embodiment. At 702, the method 700 includes parsing a packet payload to determine a priority value.

In an embodiment, parsing the packet payload to determine the priority value comprises decoding a 3-bit priority code point (PCP) field in a virtual local area network (VLAN) tag. In a further embodiment, the VLAN tag is an IEEE 802.1Q tag.

At 704, the method 700 includes determining a corresponding traffic class based on the priority value from the packet payload. In an embodiment, determining the corresponding traffic class based on the priority value from the packet payload includes performing a lookup in a PCP-to-traffic class map.

At 706, the method 700 includes routing the packet payload to one of a plurality of traffic class-based packet buffers based on the traffic class.

At 708, the method 700 includes retrieving a packet payload from the plurality of traffic class-based packet buffers based on the traffic class. In an embodiment, retrieving the packet payload from the plurality of traffic class-based packet buffers based on the traffic class includes retrieving packet payloads in a decreasing order of priority.

At 710, the method 700 includes placing the packet payload in a queue for a direct memory access (DMA) circuitry to store the packet payload in main memory. In an embodiment, storing the packet payloads in main memory includes using a channel-based router to transmit high-priority packets over a different channel than lower-priority packets.

### Hardware Platform

Embodiments may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

A processor subsystem may be used to execute the instructions on the machine-readable medium. The processor subsystem may include one or more processors, each with one or more cores. Additionally, the processor subsystem may be disposed on one or more physical devices. The processor subsystem may include one or more specialized processors, such as a graphics processing unit (GPU), a digital signal processor (DSP), a field programmable gate array (FPGA), or a fixed function processor.

Examples, as described herein, may include, or may operate on, logic or a number of components, modules, or mechanisms. Modules may be hardware, software, or firmware communicatively coupled to one or more processors in order to carry out the operations described herein. Modules may be hardware modules, and as such modules may be considered tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software; the general-purpose hardware processor may be configured as respective different modules at different times. Software may accordingly configure a hardware processor, for example, to constitute a particular module at one instance of time and to constitute a different module at a different instance of time. Modules may also be software or firmware modules, which operate to perform the methodologies described herein.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or modules may, collectively or individually, be embodied as circuitry that forms part of a larger system, for example, an integrated circuit (IC), system on-chip (SoC), desktop computers, laptop computers, tablet computers, servers, smart phones, etc.

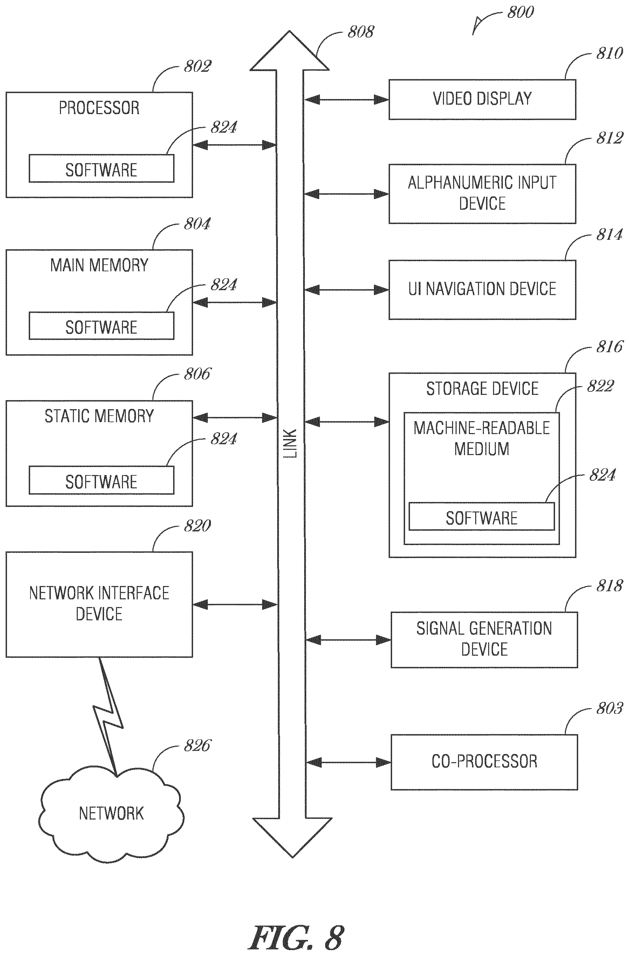

FIG. 8 is a block diagram illustrating a machine in the example form of a computer system 800, within which a set or sequence of instructions may be executed to cause the machine to perform any one of the methodologies discussed herein, according to an example embodiment. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be a wearable device, personal computer (PC), a tablet PC, a hybrid tablet, a personal digital assistant (PDA), a mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 800 includes at least one processor 802 (e.g., a central processing unit (CPU), a graphics processing unit (GPU) or both, processor cores, compute nodes, etc.), at least one co-processor 803(e.g., FPGA, specialized GPU, ASIC, etc.), a main memory 804 and a static memory 806, which communicate with each other via a link 808 (e.g., bus). The computer system 800 may further include a video display unit 810, an alphanumeric input device 812 (e.g., a keyboard), and a user interface (UI) navigation device 814 (e.g., a mouse). In one embodiment, the video display unit 810, input device 812 and UI navigation device 814 are incorporated into a touch screen display. The computer system 800 may additionally include a storage device 816 (e.g., a drive unit), a signal generation device 818 (e.g., a speaker), a network interface device 820, and one or more sensors (not shown), such as a global positioning system (GPS) sensor, compass, accelerometer, gyrometer, magnetometer, or other sensor.

The storage device 816 includes a machine-readable medium 822 on which is stored one or more sets of data structures and instructions 824 (e.g., software) embodying or utilized by any one or more of the methodologies or functions described herein. The instructions 824 may also reside, completely or at least partially, within the main memory 804, static memory 806, and/or within the processor 802 during execution thereof by the computer system 800, with the main memory 804, static memory 806, and the processor 802 also constituting machine-readable media.

While the machine-readable medium 822 is illustrated in an example embodiment to be a single medium, the term "machine-readable medium" may include a single medium or multiple media (e.g., a centralized or distributed database, and/or associated caches and servers) that store the one or more instructions 824. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks.

The instructions 824 may further be transmitted or received over a communications network 826 using a transmission medium via the network interface device 820 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Bluetooth, Wi-Fi, 3G, and 4G LTE/LTE-A or WiMAX networks). The term "transmission medium" shall be taken to include any intangible medium that is capable of storing, encoding, or carrying instructions for execution by the machine, and includes digital or analog communications signals or other intangible medium to facilitate communication of such software.

Network interface device 820 may be configured or programmed to implement the methodologies described herein. In particular, the network interface device 820 may provide various aspects of packet inspection, aggregation, queuing, and processing. The network interface device 820 may also be configured or programmed to communicate with a memory management unit (MMU), processor 802, main memory 804, static memory 806, or other components of the system 800 over the link 808. The network interface device 820 may query or otherwise interface with various components of the system 800 to inspect cache memory; trigger or cease operations of a virtual machine, process, or other processing element; or otherwise interact with various computing units or processing elements that are in the system 800 or external from the system 800.

### Additional Notes & Examples:

Example 1 is a network interface device comprising: media access control (MAC) circuitry, including: a priority router to: parse a packet payload to determine a priority value; determine a corresponding traffic class based on the priority value from the packet payload; and route the packet payload to one of a plurality of traffic class-based packet buffers based on the traffic class; and a packet router to: retrieve a packet payload from the plurality of traffic class-based packet buffers based on the traffic class; and place the packet payload in a queue for a direct memory access (DMA) circuitry to store the packet payload in main memory.

In Example 2, the subject matter of Example 1 includes, wherein to parse the packet payload to determine the priority value, the priority router is to decode a 3-bit priority code point (PCP) field in a virtual local area network (VLAN) tag.

In Example 3, the subject matter of Example 2 includes, wherein the VLAN tag is an IEEE 802.1Q tag.

In Example 4, the subject matter of Examples 1-3 includes, wherein to determine the corresponding traffic class based on the priority value from the packet payload, the priority router is to perform a lookup in a PCP-to-traffic class map.

In Example 5, the subject matter of Examples 1-4 includes, wherein to retrieve the packet payload from the plurality of traffic class-based packet buffers based on the traffic class, the packet router is to retrieve packet payloads in a decreasing order of priority.

In Example 6, the subject matter of Examples 1-5 includes, wherein to store the packet payloads in main memory, the DMA circuitry is to use a channel-based router to transmit high-priority packets over a different channel than lower-priority packets.

Example 7 is a method for operating a network interface device comprising: parsing a packet payload to determine a priority value; determining a corresponding traffic class based on the priority value from the packet payload; routing the packet payload to one of a plurality of traffic class-based packet buffers based on the traffic class; retrieving a packet payload from the plurality of traffic class-based packet buffers based on the traffic class; and placing the packet payload in a queue for a direct memory access (DMA) circuitry to store the packet payload in main memory.

In Example 8, the subject matter of Example 7 includes, wherein parsing the packet payload to determine the priority value comprises decoding a 3-bit priority code point (PCP) field in a virtual local area network (VLAN) tag.

In Example 9, the subject matter of Example 8 includes, wherein the VLAN tag is an IEEE 802.1Q tag.

In Example 10, the subject matter of Examples 7-9 includes, wherein determining the corresponding traffic class based on the priority value from the packet payload comprises performing a lookup in a priority code point (PCP)-to-traffic class map.

In Example 11, the subject matter of Examples 7-10 includes, wherein retrieving the packet payload from the plurality of traffic class-based packet buffers based on the traffic class comprises retrieving packet payloads in a decreasing order of priority.

In Example 12, the subject matter of Examples 7-11 includes, wherein storing the packet payloads in main memory comprises using a channel-based router to transmit high-priority packets over a different channel than lower-priority packets.

Example 13 is at least one machine-readable medium including instructions, which when executed by a network interface device, cause the network interface device to perform operations comprising: parsing a packet payload to determine a priority value; determining a corresponding traffic class based on the priority value from the packet payload; routing the packet payload to one of a plurality of traffic class-based packet buffers based on the traffic class; retrieving a packet payload from the plurality of traffic class-based packet buffers based on the traffic class; and placing the packet payload in a queue for a direct memory access (DMA) circuitry to store the packet payload in main memory.

In Example 14, the subject matter of Example 13 includes, wherein parsing the packet payload to determine the priority value comprises decoding a 3-bit priority code point (PCP) field in a virtual local area network (VLAN) tag.

In Example 15, the subject matter of Example 14 includes, wherein the VLAN tag is an IEEE 802.1Q tag.

In Example 16, the subject matter of Examples 13-15 includes, wherein the instructions for determining the corresponding traffic class based on the priority value from the packet payload comprises instructions for performing a lookup in a priority code point (PCP)-to-traffic class map.

In Example 17, the subject matter of Examples 13-16 includes, wherein the instructions for retrieving the packet payload from the plurality of traffic class-based packet buffers based on the traffic class comprises instructions for retrieving packet payloads in a decreasing order of priority.

In Example 18, the subject matter of Examples 13-17 includes, wherein the instructions for storing the packet payloads in main memory comprising instructions for using a channel-based router to transmit high-priority packets over a different channel than lower-priority packets.

Example 19 is a network interface device comprising: direct memory access (DMA) circuitry to read a packet descriptor from a descriptor cache, and read a packet payload corresponding to the packet descriptor from main memory; and media access control (MAC) circuitry, including: a priority router to: parse the packet payload to determine a priority value; determine a corresponding traffic class based on the priority value from the packet payload; and route the packet payload to one of a plurality of traffic class-based packet buffers based on the traffic class; and scheduling circuitry to schedule packets from the plurality of traffic class-based packet buffers for transmission.

In Example 20, the subject matter of Example 19 includes, wherein to parse the packet payload to determine the priority value, the priority router is to decode a 3-bit priority code point (PCP) field in a virtual local area network (VLAN) tag.

In Example 21, the subject matter of Example 20 includes, wherein the VLAN tag is an IEEE 802.1Q tag.

In Example 22, the subject matter of Examples 19-21 includes, wherein to determine the corresponding traffic class based on the priority value from the packet payload, the priority router is to perform a lookup in a priority code point (PCP)-to-traffic class map.

In Example 23, the subject matter of Examples 19-22 includes, wherein the network interface device further comprises a packet processor to modify the packet payload before transmission.

In Example 24, the subject matter of Example 23 includes, wherein the packet processor is to insert a VLAN tag into a packet header of the packet payload.

In Example 25, the subject matter of Examples 23-24 includes, wherein the packet processor is to insert an IEEE 802.1Q tag into a packet header of the packet payload.

In Example 26, the subject matter of Examples 23-25 includes, wherein the packet processor is to replace an existing VLAN tag with a different VLAN tag in a packet header of the packet payload.

Example 27 is a method for operating a network interface device comprising: reading a packet descriptor from a descriptor cache; reading a packet payload corresponding to the packet descriptor from main memory; parsing the packet payload to determine a priority value; determining a corresponding traffic class based on the priority value from the packet payload; routing the packet payload to one of a plurality of traffic class-based packet buffers based on the traffic class; and scheduling packets from the plurality of traffic class-based packet buffers for transmission.

In Example 28, the subject matter of Example 27 includes, wherein parsing the packet payload to determine the priority value comprises decoding a 3-bit priority code point (PCP) field in a virtual local area network (VLAN) tag.

In Example 29, the subject matter of Example 28 includes, wherein the VLAN tag is an IEEE 802.1Q tag.

In Example 30, the subject matter of Examples 27-29 includes, wherein determining the corresponding traffic class based on the priority value from the packet payload comprises performing a lookup in a priority code point (PCP)-to-traffic class map.

In Example 31, the subject matter of Examples 27-30 includes, modifying the packet payload before transmission.

In Example 32, the subject matter of Example 31 includes, inserting a VLAN tag into a packet header of the packet payload.

In Example 33, the subject matter of Examples 31-32 includes, inserting an IEEE 802.1Q tag into a packet header of the packet payload.

In Example 34, the subject matter of Examples 31-33 includes, replacing an existing VLAN tag with a different VLAN tag in a packet header of the packet payload.

Example 35 is at least one machine-readable medium including instructions, which when executed by a network interface device, cause the network interface device to perform operations comprising: reading a packet descriptor from a descriptor cache; reading a packet payload corresponding to the packet descriptor from main memory; parsing the packet payload to determine a priority value; determining a corresponding traffic class based on the priority value from the packet payload; routing the packet payload to one of a plurality of traffic class-based packet buffers based on the traffic class; and scheduling packets from the plurality of traffic class-based packet buffers for transmission.

In Example 36, the subject matter of Example 35 includes, wherein the instructions for parsing the packet payload to determine the priority value comprise instructions for decoding a 3-bit priority code point (PCP) field in a virtual local area network (VLAN) tag.

In Example 37, the subject matter of Example 36 includes, wherein the VLAN tag is an IEEE 802.1Q tag.

In Example 38, the subject matter of Examples 35-37 includes, wherein the instructions for determining the corresponding traffic class based on the priority value from the packet payload comprise instructions for performing a lookup in a priority code point (PCP)-to-traffic class map.

In Example 39, the subject matter of Examples 35-38 includes, instructions for modifying the packet payload before transmission.

In Example 40, the subject matter of Example 39 includes, instructions for inserting a VLAN tag into a packet header of the packet payload.

In Example 41, the subject matter of Examples 39-40 includes, instructions for inserting an IEEE 802.1Q tag into a packet header of the packet payload.

In Example 42, the subject matter of Examples 39-41 includes, instructions for replacing an existing VLAN tag with a different VLAN tag in a packet header of the packet payload.

Example 43 is at least one machine-readable medium including instructions that, when executed by processing circuitry, cause the processing circuitry to perform operations to implement of any of Examples 1-42.

Example 44 is an apparatus comprising means to implement of any of Examples 1-42.

Example 45 is a system to implement of any of Examples 1-42.

Example 46 is a method to implement of any of Examples 1-42.

Example 43 is an edge computing system, comprising a plurality of edge computing nodes, the plurality of edge computing nodes configured with the biometric security methods of any of the examples of 1-42.

Example 44 is an edge computing node, operable in an edge computing system, comprising processing circuitry configured to implement any of the examples of 1-42.

Example 45 is an edge computing node, operable as a server in an edge computing system, configured to perform any of the examples of 1-42.

Example 46 is an edge computing node, operable as a client in an edge computing system, configured to perform any of the examples of 1-42.

Example 47 is an edge computing node, operable in a layer of an edge computing network as an aggregation node, network hub node, gateway node, or core data processing node, configured to perform any of the examples of 1-42.

Example 48 is an edge computing network, comprising networking and processing components configured to provide or operate a communications network, to enable an edge computing system to implement any of the examples of 1-42.

Example 49 is an access point, comprising networking and processing components configured to provide or operate a communications network, to enable an edge computing system to implement any of the examples of 1-42.

Example 50 is a base station, comprising networking and processing components configured to provide or operate a communications network, to enable an edge computing system to implement any of the examples of 1-42.

Example 51 is a road-side unit, comprising networking components configured to provide or operate a communications network, to enable an edge computing system to implement any of the examples of 1-42.

Example 52 is an on-premise server, operable in a private communications network distinct from a public edge computing network, the server configured to enable an edge computing system to implement any of the examples of 1-42.

Example 53 is a 3GPP 4G/LTE mobile wireless communications system, comprising networking and processing components configured with the biometric security methods of any of the examples of 1-42.

Example 54 is a 5G network mobile wireless communications system, comprising networking and processing components configured with the biometric security methods of any of the examples of 1-42.

Example 55 is a user equipment device, comprising networking and processing circuitry, configured to connect with an edge computing system configured to implement any of the examples of 1-42.

Example 56 is a client computing device, comprising processing circuitry, configured to coordinate compute operations with an edge computing system, the edge computing system configured to implement any of the examples of 1-42.

Example 57 is an edge provisioning node, operable in an edge computing system, configured to implement any of the examples of 1-42.

Example 58 is a service orchestration node, operable in an edge computing system, configured to implement any of the examples of 1-42.

Example 59 is an application orchestration node, operable in an edge computing system, configured to implement any of the examples of 1-42.

Example 60 is a multi-tenant management node, operable in an edge computing system, configured to implement any of the examples of 1-42.

Example 61 is an edge computing system comprising processing circuitry, the edge computing system configured to operate one or more functions and services to implement any of the examples of 1-42.

Example 62 is networking hardware with network functions implemented thereupon, operable within an edge computing system configured with the biometric security methods of any of examples of 1-42.

Example 63 is acceleration hardware with acceleration functions implemented thereupon, operable in an edge computing system, the acceleration functions configured to implement any of the examples of 1-42.

Example 64 is storage hardware with storage capabilities implemented thereupon, operable in an edge computing system, the storage hardware configured to implement any of the examples of 1-42.

Example 65 is computation hardware with compute capabilities implemented thereupon, operable in an edge computing system, the computation hardware configured to implement any of the examples of 1-42.

Example 66 is an edge computing system adapted for supporting vehicle-to-vehicle (V2V), vehicle-to-everything (V2X), or vehicle-to-infrastructure (V2I) scenarios, configured to implement any of the examples of 1-42.

Example 67 is an edge computing system adapted for operating according to one or more European Telecommunications Standards Institute (ETSI) Multi-Access Edge Computing (MEC) specifications, the edge computing system configured to implement any of the examples of 1-42.

Example 68 is an edge computing system adapted for operating one or more multi-access edge computing (MEC) components, the MEC components provided from one or more of: a MEC proxy, a MEC application orchestrator, a MEC application, a MEC platform, or a MEC service, according to an European Telecommunications Standards Institute (ETSI) Multi-Access Edge Computing (MEC) configuration, the MEC components configured to implement any of the examples of 1-42.

Example 69 is an edge computing system configured as an edge mesh, provided with a microservice cluster, a microservice cluster with sidecars, or linked microservice clusters with sidecars, configured to implement any of the examples of 1-42.

Example 70 is an edge computing system, comprising circuitry configured to implement one or more isolation environments provided among dedicated hardware, virtual machines, containers, virtual machines on containers, configured to implement any of the examples of 1-42.

Example 71 is an edge computing server, configured for operation as an enterprise server, roadside server, street cabinet server, or telecommunications server, configured to implement any of the examples of 1-42.

Example 72 is an edge computing system configured to implement any of the examples of 1-42 with use cases provided from one or more of: compute offload, data caching, video processing, network function virtualization, radio access network management, augmented reality, virtual reality, autonomous driving, vehicle assistance, vehicle communications, industrial automation, retail services, manufacturing operations, smart buildings, energy management, internet of things operations, object detection, speech recognition, healthcare applications, gaming applications, or accelerated content processing.

Example 73 is an edge computing system, comprising computing nodes operated by multiple owners at different geographic locations, configured to implement any of the examples of 1-42.

Example 74 is a cloud computing system, comprising data servers operating respective cloud services, the respective cloud services configured to coordinate with an edge computing system to implement any of the examples of 1-42.

Example 75 is a server, comprising hardware to operate cloudlet, edgelet, or applet services, the services configured to coordinate with an edge computing system to implement any of the examples of 1-42.

Example 76 is an edge node in an edge computing system, comprising one or more devices with at least one processor and memory to implement any of the examples of 1-42.

Example 77 is an edge node in an edge computing system, the edge node operating one or more services provided from among: a management console service, a telemetry service, a provisioning service, an application or service orchestration service, a virtual machine service, a container service, a function deployment service, or a compute deployment service, or an acceleration management service, the one or more services configured to implement any of the examples of 1-42.

Example 78 is a set of distributed edge nodes, distributed among a network layer of an edge computing system, the network layer comprising a close edge, local edge, enterprise edge, on-premise edge, near edge, middle, edge, or far edge network layer, configured to implement any of the examples of 1-42.

Example 79 is an apparatus of an edge computing system comprising: one or more processors and one or more computer-readable media comprising instructions that, when executed by the one or more processors, cause the one or more processors to perform any of the examples of 1 42.

Example 80 is one or more computer-readable storage media comprising instructions to cause an electronic device of an edge computing system, upon execution of the instructions by one or more processors of the electronic device, to perform any of the examples of 1-42.

Example 81 is a communication signal communicated in an edge computing system, to perform any of the examples of 1-42.

Example 82 is a data structure communicated in an edge computing system, the data structure comprising a datagram, packet, frame, segment, protocol data unit (PDU), or message, to perform any of the examples of 1-42.

Example 83 is a signal communicated in an edge computing system, the signal encoded with a datagram, packet, frame, segment, protocol data unit (PDU), message, or data to perform any of the examples of 1-42.

Example 84 is an electromagnetic signal communicated in an edge computing system, the electromagnetic signal carrying computer-readable instructions, wherein execution of the computer-readable instructions by one or more processors causes the one or more processors to perform any of the examples of 1-42.

Example 85 is a computer program used in an edge computing system, the computer program comprising instructions, wherein execution of the program by a processing element in the edge computing system is to cause the processing element to perform any of the examples of 1-42.

Example 86 is an apparatus of an edge computing system comprising means to perform any of the examples of 1-42.

Example 87 is an apparatus of an edge computing system comprising logic, modules, or circuitry to perform any of the examples of 1-42.

Example 88 is at least one machine-readable medium including instructions that, when executed by processing circuitry, cause the processing circuitry to perform operations to implement of any of Examples 1-87.

Example 89 is an apparatus comprising means to implement of any of Examples 1-87.

Example 90 is a system to implement of any of Examples 1-87.

Example 91 is a method to implement of any of Examples 1-87.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined with reference to the appended claims, along with the full scope of equivalents to which such claims are entitled.

## Claims

1. A method for operating a network interface device comprising:
parsing a packet payload to determine a priority value;
determining a corresponding traffic class based on the priority value from the packet payload;
routing the packet payload to one of a plurality of traffic class-based packet buffers based on the traffic class;
retrieving a packet payload from the plurality of traffic class-based packet buffers based on the traffic class; and
placing the packet payload in a queue for a direct memory access (DMA) circuitry to store the packet payload in main memory.

2. The method of claim 1, wherein parsing the packet payload to determine the priority value comprises decoding a 3-bit priority code point (PCP) field in a virtual local area network (VLAN) tag.

3. The method of claim 2, wherein the VLAN tag is an IEEE 802.1Q tag.

4. The method of claim 1, wherein determining the corresponding traffic class based on the priority value from the packet payload comprises performing a lookup in a priority code point (PCP)-to-traffic class map.

5. The method of claim 1, wherein retrieving the packet payload from the plurality of traffic class-based packet buffers based on the traffic class comprises retrieving packet payloads in a decreasing order of priority.

6. The method of claim 1, wherein storing the packet payloads in main memory comprises using a channel-based router to transmit high-priority packets over a different channel than lower-priority packets.

7. At least one machine-readable medium including instructions, which when executed by a machine, cause the machine to perform operations of any of the methods of claims 1-6.

8. An apparatus comprising means for performing any of the methods of claims 1-6.

9. A method for operating a network interface device comprising:
reading a packet descriptor from a descriptor cache;
reading a packet payload corresponding to the packet descriptor from main memory;
parsing the packet payload to determine a priority value;
determining a corresponding traffic class based on the priority value from the packet payload;
routing the packet payload to one of a plurality of traffic class-based packet buffers based on the traffic class; and
scheduling packets from the plurality of traffic class-based packet buffers for transmission.

10. The method of claim 9, wherein parsing the packet payload to determine the priority value comprises decoding a 3-bit priority code point (PCP) field in a virtual local area network (VLAN) tag.

11. The method of claim 9, wherein determining the corresponding traffic class based on the priority value from the packet payload comprises performing a lookup in a priority code point (PCP)-to-traffic class map.

12. The method of claim 9, comprising modifying the packet payload before transmission.

13. The method of claim 12, comprising inserting a VLAN tag into a packet header of the packet payload, inserting an IEEE 802.1Q tag into a packet header of the packet payload, or replacing an existing VLAN tag with a different VLAN tag in a packet header of the packet payload.

14. At least one machine-readable medium including instructions, which when executed by a machine, cause the machine to perform operations of any of the methods of claims 9-13.

15. An apparatus comprising means for performing any of the methods of claims 9-13.
